# EUROPEAN PATENT APPLICATION

(11) **EP 2 535 101 A1**
(43) Date of publication of application: **19.12.2012**
(21) Application number: 11169695.1
(22) Date of filing: 13.06.2011
(51) Int. Cl.: B01D 53/62, F02C 3/34

(54) **Flue gas recirculation with CO2 enrichment membrane**

(71) Applicant: Alstom Technology Ltd, 5400 Baden (CH)
(72) Inventor: Bahraini Hasani, Maryam, 5242 Lupfig (CH); Agostinelli, Gian-Luigi, 8048 Zurich (CH); Brautsch, Andreas A., 5030 Würenlingen (CH); Koss, Peter Ulrich, 8702 Zollikon (CH)
(74) Representative: Simonsson, Erik

(57) **Abstract**

The present invention relates to a system (1) for capturing CO₂ from a flue gas deriving from combustion of hydrocarbons which has been generated in a gas turbine (12) wherein the system comprises means for recirculating the flue gas (18, 24,25) to the inlet of a gas turbine; means for CO₂ separation (15); means for capturing CO₂ (16). The invention relates also to a method capturing CO₂ in the system.

## Description

### Field of the Invention

The present invention relates to enrichment of CO₂ in flue gas systems wherein flue gas recirculation system has been combined with a system having CO₂ enrichment membrane.

### Background of the Invention

There is a general aim to increase the concentration of CO₂ in gases generated in gas turbine based power plant.

The overall performance in terms of cost of electricity of a power plant based on a gas turbine based and equipped with a CO₂ capture system may be improved if the concentration of CO₂ in the flue gas is increased before the flue gas is treated in the CO₂ capture unit of the power plant.

There are different methods available for so-called 'CO₂ enrichment', i.e. to increase the CO₂ concentration in the flue gas.

'Flue gas recirculation', FGR is a method for increasing the CO₂ in the flue gas. This method is further described in, for example, US 19800113635, and in US 3 866 411 wherein the gas turbine is combined with hydrogen combustion and CO₂ separation.

It is also known to combine flue gas recirculation (FRG) to a gas turbine plant and by that facilitate capture of CO₂.

In EP 0744 987 a system including an offshore gas turbine, flue gas recirculation, heat recovery steam generator (HRSG), and a CO₂ capture system is described. The system is included for enhanced oil recovery.

In WO 00/48709 it is described a method for removing and recovering CO₂ from exhaust gas.

Another method for increasing the CO₂ concentration in the flue gas is via membrane separation. The membrane can provide different ranges of selectivity for specific species present in the flue gas.

Several types of membranes have been developed or are under development for CO₂separation including polymeric membrane, membrane contactors and facilitated transport membranes. Among them, polymeric membranes are the most mature. Large-scale polymeric membranes for CO₂ separation in natural gas production industry are in operation, treating a flow gas rate of about 400 m²/s (Cakerwala natural gas production in Gulf of Thailand). Polymeric membranes for CO₂ separation from coal-fired power plants with optimum selectivity and permeability have been described in "T.C. Merkel et al., Power plant post-combustion carbon dioxide capture: An opportunity for membranes, Journal of membrane science 359 (2010) 126-139". These membranes are commercially available. They may, for pilot plant tests, be designed to separate 20 ton CO₂/day.

Further, in WO 02/060561 CO2 capture by CO2 frosting capture system is described. The CO2 capture is performed by anti-sublimation. Previously, it is proposed to combine a flue gas recirculation arrangement, membrane and a high pressure solvent scrubbing process. The depleted CO2 gas stream is reintroduced into the gas turbine combustion as a high pressure stream.

However, there is still a need for a method wherein an increased concentration of CO2 is achieved.

### Summary of the Invention

The present invention relates to an integrated system comprising gas turbine based power plant with flue gas recirculation and a CO₂ capture system. In addition, the CO₂ enrichment may be further improved if combined with another CO₂ enrichment system, even called CO₂ capture system.

An object of the present invention is to provide a system for capturing CO₂ (part of it) from a flue gas deriving from combustion of hydrocarbons which has been generated in a gas turbine. The system comprises
a) means for recirculation of a first portion of the flue gas to be mixed with the flue gas at the inlet of the gas turbine;
b) means for separation of CO₂ from the second portion of flue gas;
c) means for capturing a second part of CO₂; and optionally
d) means for recirculation of depleted stream after capturing of CO₂ into the recycle of flue gas.

According to step a) a first portion of the flue gas after the gas turbine is recirculated to the gas turbine inlet, and mixed with the flue gas before the inlet into the gas turbine. The amount of recirculated flue gas may be varied and determined by flue gas recirculation (FGR) ratio showing the percentage of flue gas recirculated to the gas turbine inlet. The CO₂ concentration in the flue gas before any recirculation of flue gas, is about 5 % by volume. To double the CO₂ concentration, about 50 % of the flue gas has to be treated and recirculated to the inlet of gas turbine. The recirculated flue gas may be cooled before being mixed with the fresh air before the inlet of the gas turbine. The gas may have a temperature of about 40 to 45 degree Celsius before combined with the fresh air and reintroduced to the gas turbine.

An embodiment of the invention is a system as above, wherein the gas turbine is in connection with a heat recovery steam generator (HRGS). The HRGS is optional in the integrated system of the present invention.

An embodiment of the invention is a system as above wherein the means for CO₂ capturing is located downstream the means for separation of CO2 in the rich steam side.

An embodiment of the invention is a system as above wherein the means for capturing CO₂ can be selected from CO₂ frosting capture system, gas processing unit (GPU), and CO₂ capture by a scrubbing system.

An embodiment of the invention is a system as above wherein the means for CO₂ frosting capture system is a continuous process system where CO₂ is partially removed via frosting of CO₂ from the gaseous phase at low temperature, for example between -120°C and -56 °C.

An embodiment of the invention is a system as above wherein the means for CO₂ separation is a membrane, typically a membrane with limited CO₂selectivity having the property to enrich CO₂ concentration in the flue gas stream that is subsequently treated into the CO₂ capture unit.

An object of the present invention is to provide a method for capturing CO2 from a flue gas deriving from combustion of hydrocarbons which has been generated in a gas turbine, optionally in combination with heat recovery steam generator (HRSG), comprising the steps of
a) separating a first portion of the flue gas and recirculating this first portion of flue gas to the inlet of the gas turbine and mixing with air;
b) passing a second portion of the flue gas through means for separating CO₂ generating an enriched CO₂ gas;
c) capturing CO₂; and optionally
d) recirculating the depleted gas stream after the capturing of CO₂ into the recycle of flue gas (FGR stream).

The flue gas separated in step a) may comprise 8-9 % by volume CO₂.

An embodiment of the method is wherein the means for CO₂ separation is a membrane, preferably a membrane with limited CO₂ selectivity. The concentration of CO₂ may be further increased by a following means to capture CO₂.

An embodiment of the present invention is a method wherein the means for capturing CO₂ can be selected from, for example, CO₂ frosting capture system, gas processing unit (GPU), and CO₂ capture by a scrubbing system. The capturing of CO₂ as in step c) described above is performed by CO₂ frosting. An example of CO₂ frosting is based on CO₂ anti-sublimation, preferably performed at atmospheric pressure.

It is an advantage to achieve a high concentration of CO₂ in the gas. This is common to any post combustion capture system, for example system like chemical scrubbing process (Advanced Amine Process (AAP), Chilled Ammonina Process (CAP)) , physical scrubbing processes by absorption of CO₂ in a liquid phase (rectisol for example) and physical scrubbing processes by separation of CO₂ in solid phase from gaseus phase flue gases (like anti sublimation) or in liquid phase (like in the below example of GPU gas processing unit). The purpose to increase the concentration of CO₂ is that a lower amount of energy is needed to cool down and/or to compress flue gases (for same amount of CO₂ mass).

An embodiment of the present a method is provided wherein the capturing of CO₂ in step c) is performed by a gas processing unit (GPU). In the gas processing unit (GPU) the gas is compressed, cooled, dried, liquefied and compressed into a CO₂ rich stream in the range of 90-99 %.

According to an embodiment of the method described above the capturing CO₂ is performed in a scrubbing system, preferably a low pressure scrubbing system.

According to an embodiment of the present invention the scrubbing system is an amine based scrubbing system. According to an embodiment of the present invention the scrubbing system is an ammonia based system.

According to an embodiment of the present invention the removal rate of CO₂ in the flue gas achieved after step c) is of more than 90 %, from the flue gas to the stack.

Thus the combination of a flue gas recirculation system with the means for CO₂ separation, preferably the non-selective membrane, provide a system and a method by which the cost for CO₂ capture is reduced.

This is achieves as the mass of flue gas to be treated is lowered. A higher partial pressure of CO₂ is obtained which results in 15-70 % higher efficiency of the power put into the plant, which results in reduction of power consumption.

Also, the CO₂ gas stream comprising some parts of O₂ gas depleted can be reused, and reduce the cooling duty of the circulation flue gas cooler.

Further, it is also possible to provide a gas stream having higher amount of O₂ compared with ambient air. This implies that a higher FRG ratio may be achieved resulting in higher CO₂ concentration in the gas stream from the gas turbine.

### Brief description of the Drawing

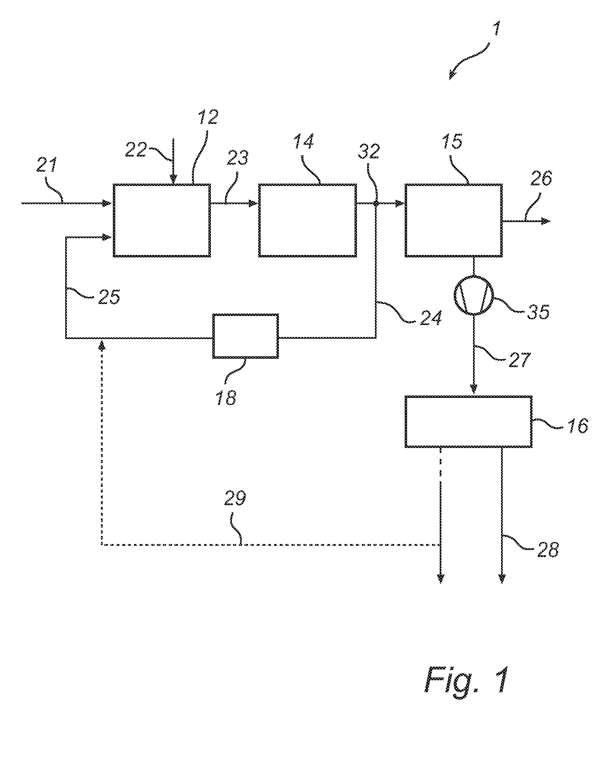

Figure 1 is a schematic representation of an embodiment of the integrated system comprising the flue gas recirculation, a membrane and the CO₂ capture system.

### Detailed description of the Invention

The present invention relates to an integrated system comprising gas turbine based power plant with flue gas recirculation and a CO₂ capture system.

Figure 1 is a schematic representation of the integrated system in accordance with an embodiment of the present invention. The integrated system (1) according to the invention comprises a gas turbine (12) which may be feeded with air, via duct (21). The gas turbine (12) is feeded with natural gas, via duct (22). The gas turbine (12) is further combined with a heat recovery steam generator (HRSG) (14) to which the gas is forwarded via duct (23).

The CO₂ concentration in the flue gas without any recirculation of flue gas, is about 4 to 5 % by volume. For double the CO₂ concentration, about 50 % of the flue gas has to be treated and re-circulated to the inlet of gas turbine. Thus, to optimize the process it is possible to elaborate with the amount of flue gas re-circulated (FRG).

The flue gas obtained after the HRSG (14) comprises about 8 to 9 % CO₂. The flue gas is then passing a split point (32) where one portion of the flue gas is forwarded to the means for CO₂ separation 15, for example, a membrane.

Another portion of the flue gas is forwarded to a flue gas cooler (18). The temperature of the flue gas is decreased from about 80 °C to about 20-45 °C after passing the flue gas cooler (18) depending on the plant specific cooling system. The flue gas is then re-circulated to the inlet of the gas turbine via duct (25).

The flue gas forwarded to the means for CO₂ separation (15), for example, membrane, is divided into two streams, the nitrogen rich exhaust gas forwarded via duct 26 and the carbon dioxide rich gas forwarded via duct (27). The membrane shall have a capacity to concentrate CO₂ to about 50%, preferably up to about 60 %. Thus, the flue gas forwarded in duct (27) may comprise CO2 of a concentration of more than 50 %, for example between 50 % and 60 %.

Further, the membrane with limited (CO₂) selectivity shall be able to operate at temperatures of between 85 °C and 95 °C of the flue gas. The membrane shall also be able to treat high mass flow of about 300 kg/s with relative low driving force and with a limited CO₂ selectivity. The driving force is provided by a blower or compressor 35 depending on the optimal feeding pressure to the means for capturing CO₂ (16).

Typically, the CO₂ rich flue gas achieved after the first separation of CO₂ comprises about 60 % by volume of CO₂ (carbon dioxide), about 10 % by volume of O₂ (oxygen), and about 30 % by volume of N₂ (nitrogen).

The carbon rich flue gas is then passing a compressor 35 to obtain a CO₂ rich stream. The means for capturing CO₂, 16 is then further enriching the CO₂ concentration to the level suitable for its final storage or reuse via the delivery duct (28). The depleted gas stream, comprising mainly N₂ and O₂, is a cold gas stream which can be vented to the atmosphere or optionally redirected to the flue gas recirculation FGR duct (25) via the duct (29) in case this is beneficial due to the cooling effect of such stream by mixing with stream from duct (24) or due to the O₂ content higher than the O₂ content in the fresh air in duct (21).

The means for capturing CO₂ (16) may for example be CO₂ frosting, liquefaction and compression system. The gas stream depleted after passing the means for CO₂ frosting has preferably an O₂ concentration that can be higher than the O₂ in the air.

The stream passing the means for capturing CO₂ and being depleted on CO₂, comprises nitrogen gas (N₂) and oxygen gas (O₂) in an increased amount. The content of the gas may be adjusted by the capture rate of the CO₂ frosting system. Also the means having limited (CO₂) selectivity may affect the content of the gas.

Another option to capture CO₂ is via gas processing unit (GPU) technology. GPU is for treatment and compression of the CO₂ rich stream obtained after the membrane with limited CO₂ selectivity. The gas will be compressed and purified when passing the GPU. It is possible to elaborate with the parameters to optimize the content of the gas stream.

The processing in the GPU comprises the following steps: compression of the gas; cooling the gas, where the water vapor will condense into water liquid; drying; liquefaction; and compression.

For the purpose of the present invention the removal rate of CO₂ in the flue gas achieved after the GPU is of more than 90 %, from the flue gas to the stack, for example of more than 95 %.

In another alternative method the means for capturing CO₂ is a scrubbing based CO₂ capture system. For example, the scrubbing system may be based on amine or ammonia scrubbing. The CO₂ capture system (16) is preferably located downstream of the membrane with limited CO₂ selectivity. The system may be a scrubbing based CO₂ capture system having the purpose to capture the CO₂ via absorption in the solvent, to regenerate the solvent which releases the CO₂ product. The capturing CO₂ is preferably performed in a low pressure scrubbing system. The CO₂ rich gas is then purified and compressed and suitable for storage or to be used for other purposes. Typically, the CO₂ rich gas is purified to a recovery rate of 90 %

Also in this embodiment the gas stream depleted from the CO₂ rich gas may be recirculated into the flue gas before its introduction into the gas turbine. The recirculated gas, rich in N₂ and O₂, held a lower temperature than the recirculated flue gas, therefore this may be utilised to adjust the temperature of the recirculated flue gas stream.

The scrubbing process may be, for example, be amine based or ammonia based. The amine suitable for the scrubbing process is typically selected from alkanol amines, for example monoethanolamine (MEA), diethanolamine (DEA), methyldiethanolamine (MDEA). Other examples of amines to used in the scrubbing process are diisopropylamine (DlPA) and aminoethoxyethanol (diglycolamine) (DGA). Also mixtures of the amines may be used in the scrubbing process. CO₂ capture by ammonia based scrubbing system or CO₂ capture by ammonia based scrubbing system

According to step a) a first portion of the flue gas after the gas turbine is recirculated to the gas turbine inlet, and mixed with fresh air.

Thus the combination of a flue gas recirculation system with a membrane provides a system and a method by which the cost for CO₂ capture is reduced. This is achieved as the mass of flue gas to be treated is lowered. Also a higher partial pressure of CO₂ is obtained which results in a higher efficiency of the power put into the plant, which results in reduction of power consumption. Also, the CO₂ gas stream comprising some parts of O₂ gas depleted can be reused, and reduce the cooling duty of the circulation flue gas cooler.

It is also possible to provide a gas stream having higher amount of O₂ compared with ambient air. That implies that a higher FRG ratio may be achieved resulting in higher CO₂ concentration in the gas stream from the gas turbine.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A system (1) for capturing CO₂ (part of it) from a flue gas deriving from combustion of hydrocarbons which has been generated in a gas turbine (12), comprising
a) means (24,25,18) for recirculating a first portion of the flue gas to the inlet of a gas turbine (12);
b) means for CO₂ separation (15) from the second portion of flue gas;
c) means for capturing CO₂ (16); and optionally
d) means for recirculation (29) of depleted stream after capturing of CO₂ into the recycle of flue gas.

2. A system according to claim (1) wherein the gas turbine is in connection with a heat recovery steam generator (HRGS) (14).

3. A system according to claim 1 wherein the means for CO₂ capturing (16) is located downstream the means for separation of CO₂ (15) in rich stream side.

4. A system according to claim 1 or 3 wherein the means for capturing CO₂ (16) can be selected from CO₂ frosting capture system, gas processing unit (GPU), and CO₂ capture by a scrubbing system.

5. A system according to claim 4 wherein the means for CO₂ frosting capture system is continuous process system where CO₂ is partially removed via frosting of CO₂ from gas phase at low temperature.

6. A system according to claim 1 wherein the means for CO₂ separation (15) is a membrane, typically a non-selective membrane having the property to enrich CO₂ concentration in the flue gas stream that is subsequently treated into the CO₂ capture unit.

7. A method for capturing CO₂ from a flue gas deriving from combustion of hydrocarbons which has been generated in a gas turbine (12), optionally in combination with heat recovery steam generator (HRSG) (14), comprising the steps of
a) separating a first portion of the flue gas, comprising 8-9 % CO₂, and recirculating this first portion of flue gas to the inlet of the gas turbine and mixing with air;
b) passing a second portion of the flue gas through means for separation the CO₂ (15) and generating an enriched CO₂ gas;
c) capturing CO₂; and optionally
d) recirculating the depleted gas stream after the capturing of CO₂ into the recycle of flue gas.

8. A method according to claim 7 wherein the flue gas in step a) comprises 8-9 % CO₂.

9. A method according to claim 7 wherein the means for separation (15) is a membrane, preferably a membrane with limited CO₂ selectivity.

10. A method according to claim 7 wherein the capturing of CO₂ (16) in step c) is performed by CO₂ frosting.

11. A method according to claim 7 wherein the capturing of CO₂ (16) in step c) is performed by a gas processing unit (GPU) wherein the gas is compressed, cooled, dried, liquefied and compressed into a CO₂ rich stream.

12. A method according to claim 7 wherein the capturing of CO₂ (16) is performed in a scrubbing system, preferably a low pressure scrubbing system.

13. A method according to claim 12 wherein the scrubbing system is an amine based scrubbing system or an ammonia based system.

14. A method according to claim 1 wherein the content of CO₂ after step c) is of more than 90 %.
